# EUROPÄISCHE PATENTSCHRIFT

(11) **EP 2 146 125 B1**
(45) Veröffentlichungstag und Bekanntmachung des Hinweises auf die Patenterteilung: **02.11.2011**
(21) Anmeldenummer: 08290698.3
(22) Anmeldetag: 17.07.2008
(51) Int. Cl.: F16L 7/00, F16L 11/20, F16L 11/15

(54) **Flexibles Leitungsrohr**
Flexible conduit pipe
Conduite flexible

(43) Veröffentlichungstag der Anmeldung: 20.01.2010
(73) Patentinhaber: Nexans, 75008 Paris (FR)
(72) Erfinder: Frohne, Christian, 30657 Hannover (DE); Baldermann, Marc, 31619 Binnen (DE); Lange, Stephan, 30900 Wedemark (DE)
(74) Vertreter: Döring, Roger

(56) Entgegenhaltungen:
- EP-A- 0 300 174
- EP-A- 1 457 729
- DE-A1- 3 116 338
- DE-A1- 3 338 465
- GB-A- 2 318 860

## Beschreibung

Die Erfindung bezieht sich auf ein flexibles Leitungsrohr gemäß dem Oberbegriff des Patentanspruchs 1.

Ein solches Leitungsrohr geht aus der DE 31 16 338 A1 hervor.

Derartige Leitungsrohre werden zum Transport unterschiedlichster Fluide eingesetzt. Das können normal temperierte, erwärmte oder gekühlte Flüssigkeiten und Gase sein. Ein spezielles Anwendungsgebiet ist beispielsweise der Transport flüssiger Gase, wie beispielsweise Stickstoff und Helium sowie insbesondere Methan. Für diesen Anwendungsfall müssen die Leitungsrohre auch thermisch gut isoliert sein, damit Temperaturen von weniger als -160 °C, bei denen die Gase flüssig sind, gehalten werden können. Dazu ist auch ein möglichst geringer Wärmeübergang zwischen Außenrohr und Innenrohr erforderlich, der auch für den Transport von erwärmten Fluiden gilt. Das jeweilige Fluid tritt in der Regel mit hoher Geschwindigkeit in das Innenrohr eines derartigen Leitungsrohrs ein, so daß dasselbe - bedingt durch die Wellung - in Strömungsrichtung des Fluids "mitgenommen" und am Ende der Übertragungsstrecke gestaucht wird. Die dadurch bedingte Verschiebung des Innenrohrs im Außenrohr führt zu einer unerwünschten Deformation des Leitungsrohrs insgesamt.

Bei dem flexiblen Leitungsrohr nach der EP 0 952 382 B1 besteht die Abstandshalterung aus zwei mit gegenläufiger Wickelrichtung auf das Innenrohr aufgebrachten Strängen aus glasfaserverstärktem Kunststoff. Im Ringraum ist außerdem Vliesmaterial als Isoliermaterial angeordnet und es herrscht ein Unterdruck zwischen 10⁻¹ mbar und 10⁻³ mbar in demselben. Dieses Leitungsrohr hat sich in der Praxis bewährt. Es kann jedoch auch hier vorkommen, daß das Innenrohr trotz des den Ringraum nahezu vollständig ausfüllenden Vliesmaterials im Außenrohr verschoben wird.

Die eingangs erwähnte DE 31 16 338 A1 beschreibt ein wärmeisoliertes Leitungsrohr, das aus zwei durch einen Ringraum voneinander getrennten, quer zu ihrer Längsrichtung gewellten Rohren aus Metall besteht. Im Ringraum sind ein Isolierstoff und eine Abstandshalterung angeordnet. Die Abstandshalterung besteht aus mit axialem Abstand zueinander angeordneten, ringsegmentförmigen Bauteilen, die bei ihrer Montage in radialer Richtung auf das innere Rohr des Leitungsrohrs aufgesteckt werden. Die Bauteile haben einen sich über bis zu 300 Grad erstreckenden, felgenartigen Ringteil, der in Montageposition am äußeren Rohr des Leitungsrohrs anliegt. Am Ringteil sind drei in Umfangsrichtung gegeneinander versetzte Stege angebracht, die in Montageposition am inneren Rohr anliegen. Die Stege weisen an ihren dem inneren Rohr zugewandten Flächen ein Auflager auf, mit dem sie in Montageposition jeweils in ein Wellental des inneren Rohres eingreifen.

Der Erfindung liegt die Aufgabe zugrunde, das eingangs geschilderte Leitungsrohr so zu gestalten, daß die gegenseitige Position von Innenrohr und Außenrohr auf Dauer stabil erhalten bleibt.

Diese Aufgabe wird gemäß den kennzeichnenden Merkmalen des Patentanspruchs 1 gelöst.

Die Ringe für die Abstandshalterung dieses Leitungsrohrs können bei der Fertigung desselben im gleichen Arbeitsgang wie die Herstellung desselben auf dem Innenrohr angebracht werden. Sie sind zumindest zum Teil so gestaltet, daß sie sowohl in die Wellung des Innenrohres als auch nach Aufbringung des Außenrohres in dessen Wellung eingreifen bzw. hineinragen. Jeder der mit Rippe und Vorsprüngen ausgerüsteten Ringe kann damit als Festpunkt bzw. feste Klammer zwischen Innenrohr und Außenrohr angesehen werden. Insgesamt ist durch die Ringe eine Relativbewegung zwischen den beiden Rohren auch bei hohen Eintrittsgeschwindigkeiten des zu transportierenden Fluids in das Innenrohr ausgeschlossen. Der Aufbau des Leitungsrohrs bleibt also auf Dauer stabil erhalten. Um die gute Biegbarkeit des Leitungsrohrs nicht zu verschlechtern, hat mit Vorteil nur ein Teil der Ringe die nach außen weisenden Vorsprünge, welche im fertigen Leitungsrohr in das Außenrohr eingreifen. Die anderen Ringe haben nur den an Innenrohr und Außenrohr anliegenden Grundkörper und die in die Wellung des Innenrohres eingreifende Rippe. Diese Ringe sind dadurch am Innenrohr festgelegt, können aber am Außenrohr gleiten. Für die Stabilität des Leitungsrohrs reicht es aus, wenn beispielsweise jeder dritte bis achte Ring nach außen weisende Vorsprünge hat. Wenn es jeder dritte Ring ist, dann liegen dazwischen jeweils zwei Ringe ohne nach außen weisende Vorsprünge. Es könnten aber auch alle Ringe oder jeder zweite Ring nach außen weisende Vorsprünge haben.

Die in der Abstandshalterung mit axialem Abstand zueinander angeordneten Ringe sind außerdem materialarm. Der Wärmeübergang zwischen den beiden Rohren wird daher durch die Ringe nur unwesentlich erhöht, zumal dieselben in das Außenrohr nur mit in Umfangsrichtung gegeneinander versetzten Vorsprüngen oder gar nicht eingreifen. Der Wärmeübergang zwischen Innenrohr und Außenrohr kann dann weiter verringert werden, wenn die Rippe der Ringe in Umfangsrichtung mindestens einmal unterbrochen ist.

Ein Ausführungsbeispiel des Erfindungsgegenstandes ist in den Zeichnungen dargestellt.

Es zeigen:
Fig. 1 in schematischer Darstellung einen Abschnitt eines Leitungsrohrs nach der Erfindung im Schnitt.
Fig. 2 und 3 Schnitte durch im Leitungsrohr nach Fig. 1 verwendbare Ringe in zwei unterschiedlichen Ausführungsformen in vergrößerter Darstellung.
Fig. 4 und 5 die innere Umfangsfläche der Ringe nach den Fig. 2 und 3 in zwei unterschiedlichen Ausführungsformen.
Fig. 6 eine Seitenansicht eines Rings nach Fig. 2.

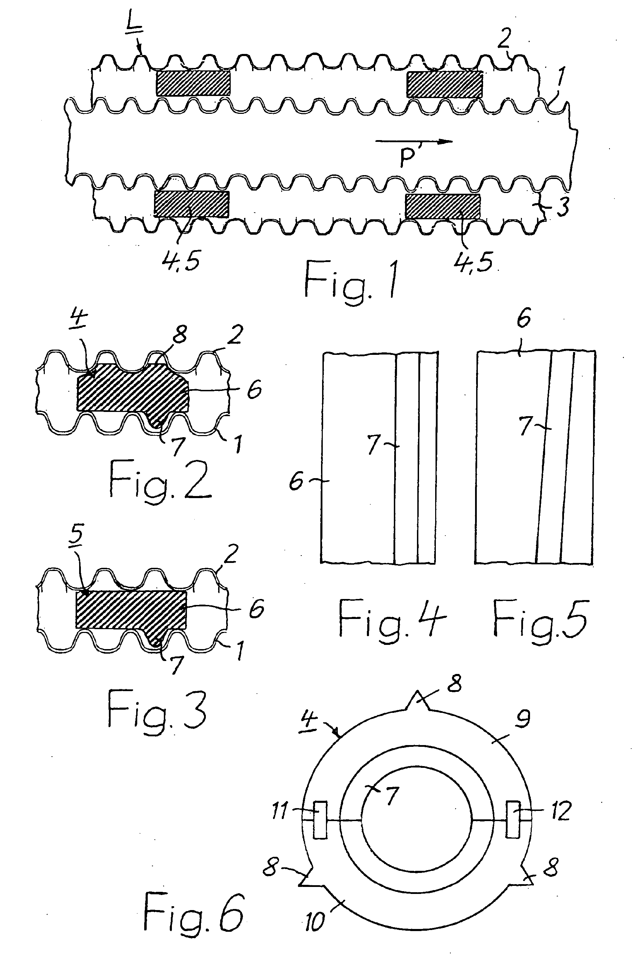

In Fig. 1 ist ein Abschnitt eines Leitungsrohrs L im Schnitt dargestellt, das aus zwei konzentrisch zueinander angeordneten, metallischen Rohren besteht - einem Innenrohr 1 und einem Außenrohr 2. Zwischen den beiden Rohren befindet sich ein umlaufender Ringraum 3, in dem eine aus Ringen 4 und 5 bestehende Abstandshalterung angebracht ist. Die Ringe 4 und 5 liegen sowohl am Innenrohr 1 als auch am Außenrohr 2 an und halten das Innenrohr konzentrisch zum Außenrohr.

Die beiden Rohre sind quer zu ihrer Längsrichtung gewellt und bestehen beispielsweise aus Stahl, vorzugsweise aus Edelstahl. Sie werden mit Vorteil jeweils kontinuierlich aus einem Stahlband zu einem Schlitzrohr mit axial verlaufendem Schlitz geformt, der im kontinuierlichen Durchlauf verschweißt wird. Das dadurch jeweils geschlossene Rohr wird anschließend gewellt. Dabei kann die Wellung ringförmig oder wendelförmig verlaufen. Durch die Wellung werden die Rohre biegbar, so daß das Leitungsrohr L zum Transport auf eine Spule aufgewickelt und zur Verlegung von derselben abgewickelt werden kann.

Die Ringe 4 und 5 bestehe beispielsweise aus glasfaserverstärktem Kunststoff oder aus Polytetrafluorethylen. Das für die Ringe 4 und 5 zu verwendende Material hängt wesentlich von der Temperatur des zu transportierenden Fluids und von der Temperatur der Umgebung ab, in der das Leitungsrohr L verlegt wird bzw. verlegt werden soll. Es ist auch möglich, die Ringe 4 und 5 aus zwei oder mehr unterschiedlichen Materialien herzustellen, die einteilig radial übereinander liegen.

Die Ringe 4 greifen im montierten Zustand sowohl in die Wellung des Innenrohres 1 als auch in die Wellung des Außenrohres 2 ein, so wie es aus Fig. 2 in vergrößerter Darstellung hervorgeht. Jeder Ring 4 hat einen Grundkörper 6, eine Rippe 7 und mindestens drei radial nach außen abstehende Vorsprünge 8. Die Höhe des Grundkörpers 6 entspricht der radialen Höhe des Ringraums 3, so daß Innenrohr 1 und Außenrohr 2 konzentrisch zueinander gehalten sind. Die Rippe 7 ist an der inneren Umfangsfläche des Rings 4 bzw. des Grundkörpers 6 angebracht und einteilig mit demselben verbunden. Sie ist an die Wellung des Innenrohres 1 so angepaßt, daß sie in eines der Wellentäler desselben paßt. Die Vorsprünge 8 sind ebenfalls einteilig mit dem Ring 4 bzw. dem Grundkörper 6 verbunden. Sie stehen nach außen von der äußerer Umgangsfläche des Rings 4 ab. Die Vorsprünge 8 sind in Umfangsrichtung des Rings 4 gegeneinander versetzt, vorzugsweise mit jeweils gleichem Abstand. Es können auch mehr als drei Vorsprünge 8 am Grundkörper 6 des Rings 4 angebracht sein.

Neben den Ringen 4 sind im Leitungsrohr L Ringe 5 angebracht, die gemäß Fig. 3 nur aus dem Grundkörper 6 und der Rippe 7 bestehen. Der Grundkörper 6 der Ringe 5 liegt in Montageposition sowohl am Innenrohr 1 als auch am Außenrohr 2 an und die Rippen 7 greifen auch bei den Ringen 5 in die Wellentäler des Innenrohres 1 ein.

Die Rippe 7 der Ringe 4 und 5 kann gemäß Fig. 4 ringförmig verlaufen. Das ist für ein mit einer ringförmigen Wellung versehenes Innenrohr 1 vorgesehen. Für ein wendelförmig gewelltes Innenrohr 1 verläuft die Rippe 7 wendelförmig. Das ist in Fig. 5 durch einen schrägen Verlauf der Rippe 7 angedeutet. Die Rippe 7 kann jeweils umlaufend auf der ganzen inneren Umfangsfläche des Grundkörpers 6 der Ringe 4 und 5 vorhanden sein. Sie kann aber auch in Umfangsrichtung mindestens einmal unterbrochen sein.

Die Ringe 4 und 5 bestehen mit Vorteil aus zwei Halbringen 9 und 10, die gemäß der Darstellung in Fig. 6 an den Trennstellen durch Riegel 11 und 12 zusammengehalten sind, welche vorzugsweise auf beiden Seiten der Ringe 4 und 5 angebracht sind. Sie sind mit Vorteil als Schnappverbindungen ausgeführt, die sich beim Zusammenfügen der beiden Halbringe 9 und 10 ohne zusätzliche Maßnahmen miteinander verbinden. Durch die Zweiteilung können die Ringe 4 und 5 sehr einfach auf das Innenrohr 1 aufgebracht werden. Dazu werden die beiden Halbringe 9 und 10 von zwei einander gegenüber liegenden Seiten an das Innenrohr 1 angelegt und mittels der Riegel 11 und 12 miteinander verbunden. Es können auch andere Befestigungselemente als die Riegel 11 und 12 eingesetzt werden, die ein möglichst einfaches und schnelles Verbinden der beiden Halbringe 9 und 10 miteinander erlauben.

Das Leitungsrohr L nach der Erfindung wird beispielsweise wie folgt hergestellt:

Das Innenrohr 1 kann in der weiter oben beschriebenen Technik aus einem Metallband geformt oder als vorgefertigtes Rohr kontinuierlich in Richtung des Pfeiles P bewegt werden. Während dieser Bewegung werden die Ringe 4 und 5 in vorgegebenen axialen Abständen und in vorgegebener Reihenfolge auf das Innenrohr 1 aufgebracht. Dazu können - wie bereits erwähnt - die beiden Halbringe 9 und 10 jeweils von zwei einander gegenüber liegenden Seiten um das Innenrohr 1 herumgelegt und miteinander verriegelt werden. Die Rippe 7 der Ringe 4 und 5 ragt dann jeweils in eines der Wellentäler des Innenrohres 1 hinein. Die vorgegebene Reihenfolge sieht in bevorzugter Ausführungsform vor, daß jeder dritte Ring ein Ring 4 mit Vorsprüngen 8 ist, während die zweiten und dritten Ringe jeweils Ringe 5 ohne nach außen weisende Vorsprünge sind.

Anschließend wird im gleichen Arbeitsgang, ebenfalls mit kontinuierlicher Bewegung in Richtung des Pfeiles P, das Außenrohr 2 in der weiter oben beschriebenen Technik aus einem Metallband um die Ringe 4 und 5 herumgeformt. Beim Wellen des Außenrohres 2 dringt zumindest ein Wellental desselben in die Vorsprünge 8 der Ringe 4 ein, so daß dieselben an den entsprechenden Stellen zusammengedrückt werden und im Bereich mindestens eines benachbarten Wellenbergs in diesen hineinragen. Das geht aus der Darstellung in Fig. 2 hervor. Durch jeden der Ringe 4 ist auf diese Weise eine feste Verbindung zwischen Innenrohr 1 und Außenrohr 2 geschaffen. Das Innenrohr 1 kann sich daher nicht in axialer Richtung relativ zum Außenrohr 2 bewegen. An den Ringen 5 liegt das Außenrohr 2 im fertigen Leitungsrohr L an deren Grundkörper 6 an.

Über dem Außenrohr 2 kann gegebenenfalls ein Schutzmantel aus Isoliermaterial angebracht sein. Er kann beispielsweise aus Polyvinylchlorid oder Polyurethan bestehen.

## Patentansprüche

1. Flexibles Leitungsrohr zum Transport von Fluiden, welches aus zwei konzentrisch zueinander angeordneten, gewellten metallischen Rohren besteht, einem Innenrohr und einem Außenrohr, die durch einen umlaufenden Ringraum voneinander getrennt sind, in dem eine Abstandshalterung angeordnet ist, **dadurch gekennzeichnet,**
- **daß** die Abstandshalterung aus einer Vielzahl von mit einem Grundkörper (6), dessen Höhe der radialen Höhe des Ringraums (3) entspricht, an Innenrohr (1) und Außenrohr (2) anliegenden Ringen (4,5) besteht, die mit axialem Abstand zueinander im Ringraum (3) angeordnet sind,
- **daß** die Ringe an ihrer inneren Umfangsfläche eine sich in Umfangsrichtung erstreckende, der Wellung des Innenrohres (1) entsprechende Rippe (7) aufweisen, die jeweils in ein Wellental des Innenrohrs (1) eingreift, und
- **daß** zumindest an einem Teil der Ringe (4,5) an deren Grundkörper (6) mindestens drei in Umfangsrichtung gegeneinander versetzte, radial nach außen abstehende Vorsprünge (8) angebracht sind, die in die Wellung des Außenrohres (2) eingreifen.

2. Leitungsrohr nach Anspruch 1, **dadurch gekennzeichnet, daß** jeder dritte bis achte Ring (4) an seiner äußeren Umfangsfläche Vorsprünge (8) aufweist, während die dazwischen liegenden Ringe keine nach außen weisenden Vorsprünge haben.

3. Leistungsrohr nach Anspruch 1 oder 2, **dadurch gekennzeichnet, daß** die Rippe (7) der Ringe (4,5) mit ringförmigem oder wendelförmigem Verlauf in Umfangsrichtung rundum vorhanden ist.

4. Leitungsrohr nach Anspruch 1 oder 2, **dadurch gekennzeichnet, daß** die Rippe (7) der Ringe (4,5) mit ringförmigem oder wendelförmigem Verlauf in Umfangsrichtung mindestens einmal unterbrochen ist.

5. Leitungsrohr nach einem der Ansprüche 1 bis 3, **dadurch gekennzeichnet, daß** die Ringe (4,5) jeweils aus zwei Halbringen bestehen, die im Montagezustand miteinander verbunden sind.

## Claims

1. Flexible pipe for the transport of fluids, which consists of two corrugated metallic tubes, an inner tube and an outer tube, which are arranged concentrically to one another and are separated from one another by an annular space which contains a spacer device, **characterized in**
- **that** the spacer device consists of a plurality of rings (4,5) which bear with a basic body (6) against the innertube (1) and the outer tube (2) and are arranged at an axial distance from one another in the annular space (3), the hight of the basic body (6) corresponding to the radial hight of the annular space (3),
- **that** the rings have on their inner circumferential surface a rib (7) which extends in the circumferential direction, correspondsto the corrugation of the inner tube (1) and engages in a respective corrugation trough of the innertube (1), and
- **that** at least three projections (8) are provided at least on one part of the rings (4,5) on theirbasic body (6), which projections (8) are offset from one another in the circumferential direction, protrude radially outwards and engage in the corrugation of the outertube (2).

2. Pipe according to claim 1, **characterized in that** every third to eighth ring (4) has projections (8) on its outer circumferential surface, whereas the rings lying in between have no projections pointing outwards.

3. Pipe according to claim 1 or 2, **characterized in that** the rib (7) of the rings (4,5) is present all around in the circumferential direction and runs in an annular or helical manner.

4. Pipe according to claim 1 or 2, **characterized in that** the rib (7) of the rings (4,5) is interrupted at least one in the circumferential direction and runs in an annular or helical manner.

5. Pipe according to one of the claims 1 to 3, **characterized in that** the rings (4,5) each consist of two half-rings which are connected to one another in the fitted state.

## Revendications

1. Conduite flexible pour le transport de fluides, qui se compose de deux tubes métalliques ondulés, disposés concentriquement l'un par rapport à l'autre, un tube intérieur et un tube extérieur, qui sont séparés l'un de l'autre par un espace annulaire périphérique, dans lequel est disposé un support d'écartement, **caractérisée en ce que**
- le support d'écartement se compose d'une pluralité d'anneaux (4, 5) appliqués sur le tube intérieur (1) et le tube extérieur (2) avec un corps de base (6), dont la hauteur correspond à la hauteur radiale de l'espace annulaire (3), et qui sont disposés dans l'espace annulaire (3) avec une distance axiale l'un de l'autre,
- les anneaux présentent sur leur surface périphérique intérieure une nervure (7) s'étendant en direction périphérique et correspondant à l'ondulation du tube intérieur (1), qui s'engage à chaque fois dans une vallée de l'ondulation du tube intérieur (1), et
- au moins trois saillies (8), dressées radialement vers l'extérieur et décalées l'une parrapport à l'autre en direction périphérique, qui s'engagent dans l'ondulation du tube extérieur(2), sont placées au moins surune partie des anneaux (4, 5) sur leur corps de base (6).

2. Conduite selon la revendication 1, **caractérisée en ce que** chaque troisième à huitième anneau (4) présente des saillies (8) sur sa surface périphérique extérieure, tandis que le anneaux situés entre ceux-ci ne portent aucune saillie dressée vers l'extérieur.

3. Conduite selon la revendication 1 ou 2, **caractérisée en ce que** la nervure (7) des anneaux (4, 5) réalisée avec un tracé en forme d'anneau ou en forme d'hélice est présente tout autour en direction périphérique.

4. Conduite selon la revendication 1 ou 2, **caractérisée en ce que** la nervure (7) des anneaux (4, 5) réalisée avec un tracé en forme d'anneau ou en forme d'hélice est interrompue au moins une fois en direction périphérique.

5. Conduite selon l'une quelconque des revendications 1 à 3, **caractérisée en ce que** les anneaux (4, 5) se composent à chaque fois de deux demi-anneaux, qui sont assemblés l'un à l'autre à l'état monté.
